# EUROPÄISCHE PATENTANMELDUNG

(11) **EP 1 104 131 A2**
(43) Veröffentlichungstag der Anmeldung: **30.05.2001**
(21) Anmeldenummer: 00124622.2
(22) Anmeldetag: 10.11.2000
(51) Int. Cl.: H04L 12/24

(54) **Verfahren und Vorrichtung zum Erzeugen von kundenspezifischen Konfigurationsdatensätzen für Netzwerkelemente eines Telekommunikationssystems**

(30) Priorität: 27.11.1999 DE 19957251
(71) Anmelder: ALCATEL, 75008 Paris (FR)
(72) Erfinder: Schuttack, Cornelius, 70806 Kornwestheim (DE); Meyer, Heinz-Holger, 70499 Stuttgart (DE)
(74) Vertreter: KOHLER SCHMID + PARTNER

(57) **Zusammenfassung**

Ein Verfahren zum Erzeugen von kundenspezifischen Konfigurationsdatensätzen für Netzwerkelemente (2) eines Telekommunikationsnetzwerkes (1) umfaßt folgende Schritten:
Aufbau einer Referenzdatenbank (5), in welcher jedem einzelnen Leistungsmerkmal (f1,f2,f3,...) des Telekommunikationsnetzwerkes (1) die dafür jeweils erforderlichen Konfigurationsdaten zugeordnet sind;
Auswählen der von einem Kunden für sein Netzwerkelement (2) gewünschten Leistungsmerkmale (f1,f2,f3,...) durch den Kunden; und
Erstellen eines kundenspezifischen Konfigurationsdatensatzes aus denjenigen Konfigurationsdaten, die den ausgewählten Leistungsmerkmalen (f1,f2,f3,...) durch die Referenzdatenbank (5) zugewiesen sind.

## Beschreibung

Die Erfindung betrifft ein Verfahren zum Erzeugen von kundenspezifischen Konfigurationsdatensätzen für Netzwerkelemente eines Telekommunikationssystems sowie Netzwerkmanagementzentrum, Vorrichtung und Computerprodukt dafür.

Um Netzwerkelemente eines Telekommunikationsnetzwerkes bzw. -systems mit Leistungsmerkmalen auszustatten bzw. zu konfigurieren, ist es bekannt, einige vollständige Konfigurationsdatensätzen vorab zu erstellen. Dabei muß jeder dieser Datensätze als Ganzes entwickelt werden, so daß vom Kunden beliebige Kombinationen von Leistungsmerkmalen entweder gar nicht ausgewählt werden können oder für die gewünschte Kombination der jeweilige Datensatz mit hohem Aufwand neu entwickelt werden muß.

Die jeweiligen Datensätze sollten beim Hochfahren oder Laden der Netzwerkelemente respektiert oder von einem Netzwerkmanagement während des Betriebs heruntergeladen bzw. geändert werden können.

Der Erfindung liegt daher die Aufgabe zugrunde, ein Verfahren zum einfachen Erzeugen von kundenspezifischen Konfigurationsdatensätzen für Netzwerkelemente eines Telekommunikationsystems zu schaffen sowie dafür entsprechende Vorrichtungen bereitzustellen.

Diese Aufgabe wird erfindungsgemäß durch ein Verfahren mit folgenden Verfahrensschritten gelöst:
Aufbau einer Referenzdatenbank, in welcher jedem einzelnen Leistungsmerkmal des Telekommunikationsnetzwerkes die dafür jeweils erforderlichen Konfigurationsdaten zugeordnet sind;
Auswählen der von einem Kunden für sein Netzwerkelement gewünschten Leistungsmerkmale durch den Kunden; und
Erstellen eines kundenspezifischen Konfigurationsdatensatzes aus denjenigen Konfigurationsdaten, die den ausgewählten Leistungsmerkmalen durch die Referenzdatenbank zugewiesen sind.

Durch dieses Verfahren werden eine flexible und schnelle Kundenanpassung (Customization) von Netzwerkelementen und eine Reduzierung der Betriebskosten möglich. Das Verfahren bietet außerdem eine benutzerfreundliche Schnittstelle für die Kundenanpassung von Netzwerkelementen. Zusätzlich stellt dieses Verfahren sicher, daß nur die vom Kunden "bezahlten" Leistungsmerkmale genutzt werden können.

Bei bevorzugten Verfahrensausgestaltungen werden in der Referenzdatenbank als Konfigurationsdaten Software-Befehle und/oder Software-Parametersätze einer die Netzwerkelemente konfigurierenden Software gespeichert.

Die Erfindung betrifft in einem anderen Aspekt auch ein Netzwerkmanagementzentrum und eine Vorrichtung, die jeweils eine Referenzdatenbank, in welcher jedem einzelnen Leistungsmerkmal des Telekommunikationsnetzwerkes die dafür jeweils erforderlichen Konfigurationsdaten zugeordnet sind, Mittel für eine kundenspezifische Auswahl der von dem Kunden für sein Netzwerkelement gewünschten Leistungsmerkmale und Mittel für das Erstellen eines kundenspezifischen Konfigurationsdatensatzes aus den Konfigurationsdaten, die den ausgewählten Leistungsmerkmalen durch die Referenzdatenbank zugewiesen sind, aufweisen.

Insbesondere die Vorrichtung bietet eine benutzerfreundliche Schnittstelle, um Netzwerkelemente entsprechend Kundenwünschen schnell und einfach konfigurieren zu können.

Die Erfindung betrifft in einem weiteren Aspekt auch ein Computerprodukt, insbesondere ein Computerprogramm, zum Durchführen des oben beschriebenen Verfahrens.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung.

Es zeigt:
- Fig. 1: schematisch ein Telekommunikationsnetzwerk mit erfindungsgemäßen Komponenten; und
- Fig. 2: beispielhaft ein beim Konfigurieren eines Netzwerkelements des Telekommunikationsnetzwerkes ablaufenden Programms.

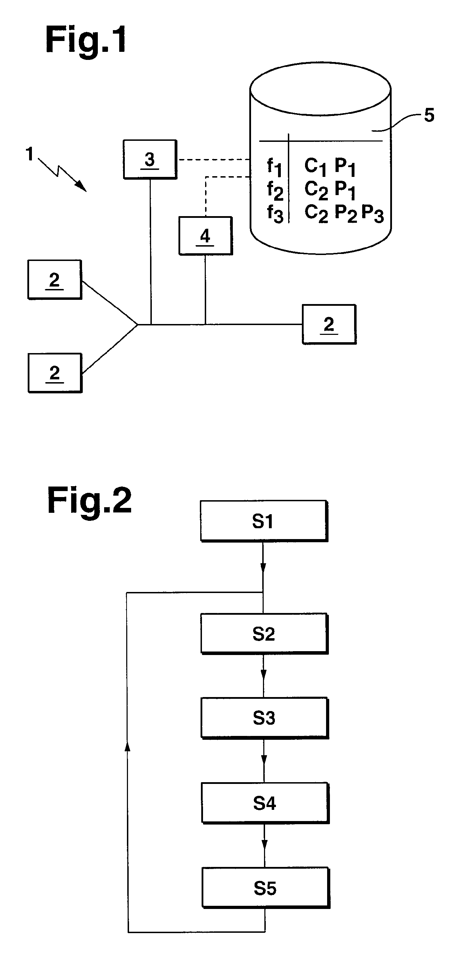

Das in **Fig. 1** gezeigte Telekommunikationsnetzwerk **1** weist drei Netzwerkelemente **2** sowie ein Netzwerkmanagementzentrum **3** und eine Konfigurationsvorrichtung **4** auf. Alle Leistungsmerkmale des Telekommunikationsnetzwerkes 1 sind in einer Referenzdatenbank **5** gespeichert, in der jedem Leistungsmerkmal **f1**, **f2**, **f3**,... die erforderlichen Konfigurationsdaten zugeordnet sind, um ein Netzwerkelement 2 mit einem oder mehreren dieser Leistungsmerkmale konfigurieren zu können.

In der Referenzdatenbank 5 sind als Konfigurationsdaten Befehle **C1**, **C2**, **C3**,... und/oder ergänzende Parametersätze **P1**, **P2**, **P3** eines Konfigurationsprogramms (Software) gespeichert, mit der die Netzwerkelemente 2 konfiguriert werden.

In der Konfigurationsvorrichtung 4 werden von einem Kunden die von ihm für sein Netzwerkelement 2 gewünschten Leistungsmerkmale, z.B. die Leistungsmerkmale f2 und f3, ausgewählt. Mittels der Referenzdatenbank 5 wird ein kundenspezifischer Konfigurationsdatensatz für dieses Netzwerkelement 2 erstellt, im vorliegenden Fall also die Befehls- und Parameterpaare (C2,P1) und (C2,P2,P3). Mit dem so erzeugten Konfigurationsdatensatz wird von der Konfigurationsvorrichtung 4 die Produktion der Software-Pakete für das entsprechende Netzwerkelement 2 durchgeführt und initiiert die entsprechende Customization des Netzwerkelements 2. Es ist auch möglich, den Konfigurationsdatensatz vom Netzwerkmanagementzentrum 3 während des Betriebs des Netzwerkelements 2 aufzubauen und dann herunterzuladen.

In **Fig. 2** ist beispielhaft ein Ablaufdiagramm (Programm) gezeigt, das im Managementzentrum 3 oder in der Konfigurationsvorrichtung 4 abläuft, um einen kundenspezifischen Konfigurationsdatensatz für ein Netzwerkelement 2 zu erzeugen.

Zunächst wird in Schritt **S1** die Referenzdatenbank 5 aufgebaut, um jedem Leistungsmerkmal f1,f2,f3,... des Telekommunikationsnetzwerkes 1 die dafür jeweils erforderlichen Konfigurationsdaten zuzuordnen. In Schritt **S2** wählt der Kunde die gewünschten Leistungsmerkmale seines Netzwerkelements 2 aus. Für jedes seiner Leistungsmerkmale 2 werden anhand der Referenzdatenbank 5 die jeweiligen Konfigurationsdaten (Befehl- und Parametersatz) ermittelt (Schritt **S3**), aus denen dann ein Konfigurationsdatensatz für das Netzwerkelement 2 erstellt wird (Schritt **S4**). Mit diesem Konfigurationsdatensatz wird dann das Netzwerkelement 2 mit den gewünschten Leistungsmerkmalen konfiguriert (Schritt **S5**). Das Programm springt zurück zu Schritt S2 und ist zur Konfiguration eines neuen Netzwerkelements bereit.

## Patentansprüche

1. Verfahren zum Erzeugen von kundenspezifischen Konfigurationsdatensätzen für Netzwerkelemente (2) eines Telekommunikationsnetzwerkes (1), mit folgenden Schritten:
Aufbau einer Referenzdatenbank (5), in welcher jedem einzelnen Leistungsmerkmal (f1,f2,f3,...) des Telekommunikationsnetzwerkes (1) die dafür jeweils erforderlichen Konfigurationsdaten zugeordnet sind;
Auswählen der von einem Kunden für sein Netzwerkelement (2) gewünschten Leistungsmerkmale (f1,f2,f3,...) durch den Kunden; und
Erstellen eines kundenspezifischen Konfigurationsdatensatzes aus denjenigen Konfigurationsdaten, die den ausgewählten Leistungsmerkmalen (f1,f2,f3,...) durch die Referenzdatenbank (5) zugewiesen sind.

2. Verfahren nach Anspruch 1, dadurch gekennzeichnet, daß in der Referenzdatenbank (5) als Konfigurationsdaten Software-Befehle (C1,C2,C3,...) und/oder Software-Parametersätze (P1,P2,P3,...) einer die Netzwerkelemente (2) konfigurierenden Software gespeichert werden.

3. Netzwerkmanagementzentrum (3) eines Telekommunikationsnetzwerkes (1),
mit einer Referenzdatenbank (5), in welcher jedem einzelnen Leistungsmerkmal (f1,f2,f3,...) des Telekommunikationsnetzwerkes (1) die dafür jeweils erforderlichen Konfigurationsdaten zugeordnet sind,
mit Mitteln für eine kundenspezifische Auswahl der von einem Kunden für sein Netzwerkelement (2) gewünschten Leistungsmerkmale (f1,f2,f3,...)
und mit Mitteln für das Erstellen eines kundenspezifischen Konfigurationsdatensatzes aus den Konfigurationsdaten, die den ausgewählten Leistungsmerkmalen (f1,f2,f3,...) durch die Referenzdatenbank (5) zugewiesen sind.

4. Vorrichtung (4) zum Erzeugen von kundenspezifischen Konfigurationsdatensätzen,
mit einer Referenzdatenbank (5), in welcher den Leistungsmerkmalen (f1,f2,f3,...) des Telekommunikationsnetzwerkes (1) die dafür jeweils erforderlichen Konfigurationsdaten zugeordnet sind,
mit Mitteln für eine kundenspezifische Auswahl der von einem Kunden für sein Netzwerkelement (2) gewünschten Leistungsmerkmale (f1,f2,f3,...)
und mit Mitteln für das Erstellen eines kundenspezifischen Konfigurationsdatensatzes aus den Konfigurationsdaten, die den ausgewählten Leistungsmerkmalen (f1,f2,f3,...) durch die Referenzdatenbank (5) zugewiesen sind.

5. Computerprodukt mit Computerprogramm-Codemitteln, die geeignet sind, alle Schritte des Verfahrens nach Anspruch1 oder 2 durchzuführen.

6. Computerprodukt nach Anspruch 5, dadurch gekennzeichnet, daß das Computerprodukt ein Computerprogramm ist.

7. Computerprodukt nach Anspruch 5, dadurch gekennzeichnet, daß das Computerprodukt ein computerlesbares Speichermedium ist.
